# FASCICULE DE BREVET EUROPEEN

(11) **EP 2 887 765 B1**
(45) Date de publication et mention de la délivrance du brevet: **24.08.2016**
(21) Numéro de dépôt: 14196297.7
(22) Date de dépôt: 04.12.2014
(51) Int. Cl.: H05B 3/56, H05B 3/48, B60S 1/48

(54) **Elément filaire conducteur chauffant pour la fabrication d'une conduite de chauffage et de transport d'un liquide lave glace à puissance linéique de chauffage controlée, conduite de chauffage et dispositif d'essuyage associés**
Aufheizendes leitendes Drahtelement für die Herstellung einer Heiz- und Transportleitung einer Scheibenwaschflüssigkeit mit kontrollierter linearer Heizleistung, entsprechende Heizleitung und entsprechende Scheibenwischvorrichtung
Heat-conducting wire element for manufacturing a heating pipe and for conveying a windscreen washer liquid with controlled linear heating power, related heating pipe and wiping device

(30) Priorité: 17.12.2013 FR 1362755
(43) Date de publication de la demande: 24.06.2015
(73) Titulaire: Valeo Systèmes d'Essuyage, 78321 Le Mesnil Saint Denis (FR)
(72) Inventeur: Caillot, Gérald, 78720 Cernay la Ville (FR); Jarasson, Jean-Michel, 78321 Le Mesnil Saint Denis (FR); Izabel, Vincent, 91380 Chilly Mazarin (FR)
(74) Mandataire: Callu Danseux, Violaine

(56) Documents cités:
- EP-A1- 2 575 409
- EP-A2- 2 109 344
- FR-A1- 2 971 471
- US-A1- 2005 083 638
- US-A1- 2012 008 927
- US-A1- 2013 193 129

## Description

L'invention concerne une conduite de chauffage et de transport de liquide lave-glace intégrant un fil conducteur chauffant réalisé à partir d'un élément filaire conducteur chauffant, tel que celui divulgué par US2012/0008927 EP 2 575 409 EP 2 109 344

L'invention porte en outre sur un dispositif d'essuyage pour surface vitrée de véhicule automobile.

L'invention porte enfin sur un procédé de fabrication d'une conduite de chauffage et de transport du liquide lave glace.

La distribution du liquide lave-glace directement au niveau de gicleurs ménagés sur les balais d'essuyage d'un véhicule automobile permet d'assurer un essuyage rapide du liquide lave-glace projeté sur la vitre en diminuant l'intervalle de temps pendant lequel la vision du conducteur est réduite en raison de la présence du liquide lave glace sur le pare-brise.

Par ailleurs, le chauffage du liquide lave-glace lorsque ce dernier présente une température inférieure à une température seuil, par exemple de 5 °C, permet d'assurer un fonctionnement optimal du système d'essuyage même lors des basses températures des conditions hivernales. FR 2 971 471, décrit ainsi un dispositif de distribution de liquide lave-glace comportant un élément chauffant.

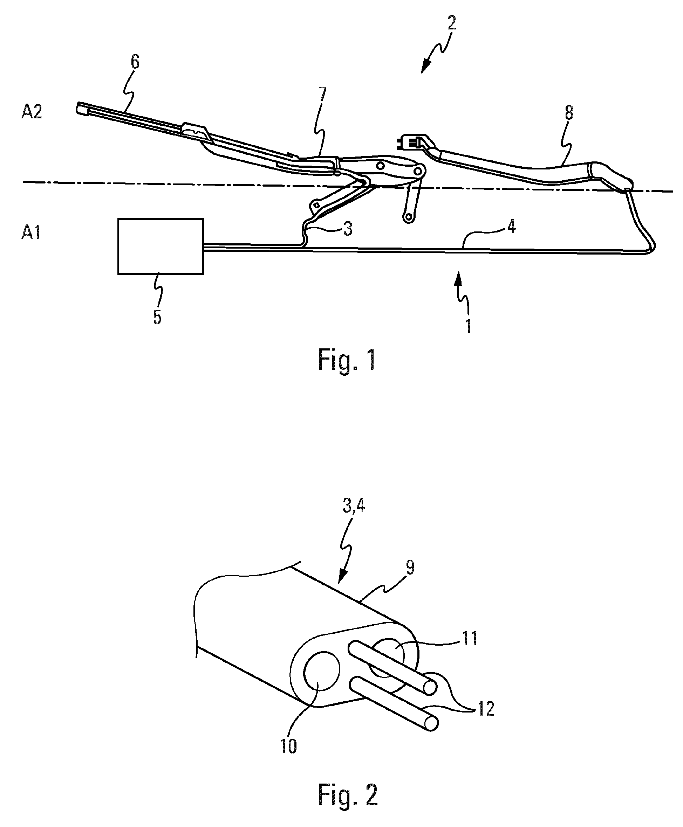

En référence à la figure 1, un système de chauffage et de distribution de liquide lave-glace 1 de l'art antérieur intégré dans un système d'essuyage 2 de vitre de véhicule automobile comporte une première 3 et une seconde 4 conduite de chauffage et de transport du liquide lave glace qui s'étendent chacune depuis un réservoir de liquide lave glace 5 et qui, via une pompe et des clapets anti retour non représentés, transportent le liquide lave-glace jusqu'aux gicleurs de deux rampes d'arrosage ménagées sur chacun des balais d'essuie-glace 6.

Pour ce faire, chacune des première 3 et seconde 4 conduite est intégrée dans le bras 7,8 du balai d'essuyage concerné.

En référence à la figure 2, chaque première et seconde conduite de chauffage et de transport du liquide lave glace 3, 4 est faite d'un manchon 9 extrudé comportant deux canaux de circulation du liquide lave glace 10,11 assurant le transport du liquide lave-glace jusqu'aux deux rampes d'arrosage ménagées sur chacun des balais d'essuyage 6. La présence de ces deux rampes d'arrosage permet la distribution du liquide lave-glace de chaque coté du balai d'essuyage 6 selon le sens d'avancée de ce balai en réduisant plus encore l'intervalle de temps pendant lequel la vision du conducteur est réduite. La cadre de l'invention ne se limite pas à l'emploi de deux canaux de circulation du liquide lave glace par balai d'essuyage puisqu'il peut également être prévu un seul canal de circulation du liquide lave glace si chaque balai d'essuyage ne comporte qu'une rampe d'arrosage.

Pour assurer le chauffage du liquide lave glace, chacune des première 3 et seconde 4 conduite comporte en outre un fil conducteur chauffant 12 qui est noyé dans la masse de la conduite considérée 3,4 et qui est doublé pour assurer sa connexion électrique, la plus souvent située au niveau des clapets anti retour.

Le fil conducteur 12 permet ainsi d'assurer le chauffage du liquide lave glace transporté dans la conduite considérée 3,4 lorsque les températures environnementales sont basses.

Mais en référence à la figure 1, les conditions environnementales des première 3 et seconde 4 conduites diffèrent selon que cette conduite 3,4 se situe dans une zone A1 située sous le capot du véhicule à proximité du moteur, ou dans une zone A2 située au niveau des bras 7,8 des balais d'essuyage hors du capot du véhicule.

On constate alors qu'à proximité du moteur sous le capot, l'environnement est plus chaud et on peut observer des surchauffes des conduites 3,4.

A l'inverse, dans la zone A2 soumise au vent froid, il est nécessaire d'assurer une puissance minimale de chauffe pour dégivrer les conduites 3,4.

Il est ainsi nécessaire de trouver un compromis en terme de puissance linéique de chauffe du fil conducteur chauffant pour éviter la surchauffe dans la zone A1 sous le capot tout en assurant le dégivrage de la conduite dans la zone A2 hors capot. Mais ce compromis est nécessairement réalisé au détriment de l'efficacité de chauffe dans la partie hors capot et/ou de la protection des conduites dans la partie située sous le capot à proximité du moteur.

Dans ce contexte, la présente invention vise un système permettant de pallier les inconvénients précités.

A cet effet, l'invention porte en premier lieu sur un élément filaire conducteur chauffant qui est essentiellement caractérisé en ce qu'il comporte un brin conducteur chauffant disposé en hélice autour d'une fibre centrale, dont le pas entre chaque brin dans au moins un premier secteur du dit élément filaire est d'une première valeur pour la production d'une première puissance linéique de chauffage, et dont le pas entre chaque brin dans au moins un second secteur du dit élément filaire est d'une seconde valeur inférieure à la première valeur pour la production d'une seconde puissance linéique de chauffage supérieure à la première puissance linéique de chauffage.

L'élément filaire conducteur chauffant de l'invention permet ainsi de pouvoir générer différente puissances linéiques selon des zones prédéfinies.

L'élément filaire conducteur chauffant de l'invention peut également comporter les caractéristiques optionnelles suivantes considérées isolément ou selon toutes les combinaisons techniques possibles :
- Il comporte une alternance de premier et de second secteurs.
- il comporte un troisième secteur disposé sur le dit élément filaire de sorte qu'entre deux troisièmes secteurs adjacents s'étendent un premier et un second secteur qui sont jointifs..

L'invention porte également sur une conduite de chauffage et de transport d'un liquide lave glace pour balai d'essuie-glace qui est essentiellement caractérisée en ce qu'elle comporte au moins un canal de circulation du liquide lave glace qui s'étend depuis un réservoir de liquide lave glace situé sous le capot du véhicule jusqu'au balai d'essuie-glace et qui est agencé à proximité d'au moins un fil conducteur chauffant réalisé à partir de l'élément filaire conducteur chauffant précédemment défini et comportant un premier et un second secteur pour assurer le chauffage du liquide lave glace circulant dans le canal de circulation selon la première puissance linéique pour la zone de la conduite située sous le capot du véhicule, et selon la seconde puissance linéique pour la zone de la conduite située hors du capot du véhicule.

La conduite de chauffage et de transport d'un liquide lave-glace pour balai d'essuie glace peut également comporter les caractéristiques optionnelles suivantes considérées isolément ou selon toutes les combinaisons techniques possibles :
- le fil conducteur chauffant est doublé en étant fait de deux portions de l'élément filaire qui sont parallèles et qui comprennent chacune un premier et un second secteurs adjacents, les deux portions de l'élément filaire étant connectées ensemble et reliés à une alimentation pour former une boucle de courant.
- le rapport entre la première valeur de pas entre chaque brin du fil conducteur chauffant pour la zone de la conduite située sous le capot du véhicule, et la seconde valeur de pas entre chaque brin du fil conducteur chauffant pour la zone de la conduite située hors du capot du véhicule est approximativement de l'ordre 2.
- la première valeur de pas entre chaque brin du fil conducteur chauffant pour la zone de la conduite située sous le capot du véhicule est comprise entre 1 et 5 millimètres.
- une gaine isolante recouvre l'ensemble formé par le brin conducteur chauffant en hélice et la fibre centrale du fil conducteur chauffant.
- le fil conducteur chauffant est disposé dans le canal de circulation du liquide lave glace.
- deux canaux de circulation du liquide lave glace pour l'alimentation d'un balai d'essuie-glace à deux rampes d'arrosage, et un fil conducteur chauffant est disposé dans chaque canal de circulation.
- le canal de circulation est agencé dans un manchon extrudé, et le fil conducteur chauffant est noyé dans la masse du manchon.
- le fil conducteur chauffant est réalisé à partir de l'élément filaire conducteur chauffant comportant le troisième secteur.
- deux canaux de circulation sont agencés dans le manchon pour l'alimentation d'un balai d'essuie-glace à deux rampes d'arrosage.

L'invention porte en outre sur un dispositif d'essuyage pour surface vitrée de véhicule automobile comportant au moins un balai d'essuie-glace muni d'au moins une première rampe d'arrosage et qui est essentiellement caractérisé en ce qu'il comporte une conduite de chauffage et de transport d'un liquide lave glace telle que précédemment définie dont le canal de circulation du liquide lave-glace est relié d'une part à la rampe d'arrosage qu'il alimente et d'autre part est destiné à être relié à une pompe.

Avantageusement, le dispositif d'essuyage comporte une conduite de chauffage et de transport d'un liquide lave glace munie de deux canaux de circulation du liquide lave-glace dont le premier canal de circulation du liquide lave- est relié d'une part à une première rampe d'arrosage qu'il alimente et d'autre part est destiné à être relié à une pompe, et le second canal de circulation du liquide lave-glace est relié d'une part à une seconde rampe d'arrosage qu'il alimente et d'autre part est destiné à être relié à une pompe..

Enfin, l'invention porte sur un procédé de fabrication d'une conduite de chauffage et de transport d'un liquide lave-glace intégrant un fil conducteur chauffant réalisé à partir d'un élément filaire conducteur chauffant qui comporte un troisième secteur, et qui est essentiellement caractérisée en ce que l'élément filaire conducteur chauffant est coextrudé dans le manchon comportant le canal de circulation du liquide lave glace, puis en ce qu'on détecte le troisième secteur de l'élément filaire conducteur chauffant et en ce que l'on coupe le manchon au niveau de ce troisième secteur détecté.

Le procédé de l'invention peut également comporter les caractéristiques optionnelles suivantes considérées isolément ou selon toutes les combinaisons techniques possibles :
- le troisième secteur de l'élément filaire conducteur chauffant est détecté par magnétisme après l'opération d'extrusion.
- lors de l'opération d'extrusion, un marquage est réalisé sur le manchon au niveau du troisième secteur de l'élément filaire conducteur chauffant, et la détection dudit troisième secteur est réalisée par repérage du dit marquage.

D'autres caractéristiques et avantages de l'invention ressortiront clairement de la description qui en est donnée ci-dessous, à titre indicatif et nullement limitatif, en référence aux figures annexées parmi lesquelles :
- la figure 1 déjà décrite est une vue schématique d'un système de chauffage et de distribution de liquide lave-glace 1 de l'art antérieur,
- la figure 2 déjà décrite est une vue schématique en perspective d'une conduite de chauffage et de transport du liquide lave glace de l'art antérieur,
- la figure 3 est une vue schématique de côté d'un fil conducteur chauffant en hélice mettant en évidence les différents composants de ce fil,
- la figure 4 est une vue schématique en perspective et en élévation d'un fil conducteur chauffant en hélice assemblé,
- la figure 5 est une vue schématique de côté d'un fil conducteur en hélice représenté sans la gaine isolante, mettant en évidence la régularité des pas entre chaque brin,
- la figure 6 une vue schématique de coté de l'élément filaire conducteur chauffant de l'invention représenté sans la gaine isolante selon une première variante de réalisation,
- la figure 7 est une vue schématique en perspective d'une conduite de chauffage et de transport d'un liquide lave-glace pour balai d'essuie-glace de l'invention selon une première configuration comportant deux canaux de circulation intégrant chacun un fil conducteur chauffant réalisé à partir de l'élément filaire de la figure 6,
- la figure 8 est une vue schématique en perspective d'une conduite de chauffage et de transport d'un liquide lave-glace pour balai d'essuie-glace de l'invention selon une seconde configuration comportant deux canaux de circulation et deux fils conducteurs chauffants réalisés à partir de l'élément filaire de la figure 6 ou de la figure 9, et
- la figure 9 est une vue schématique de coté de l'élément filaire conducteur chauffant de l'invention représenté sans la gaine isolante selon une seconde variante de réalisation qui est particulièrement adaptée pour la réalisation de la conduite de chauffage de la figure 8.

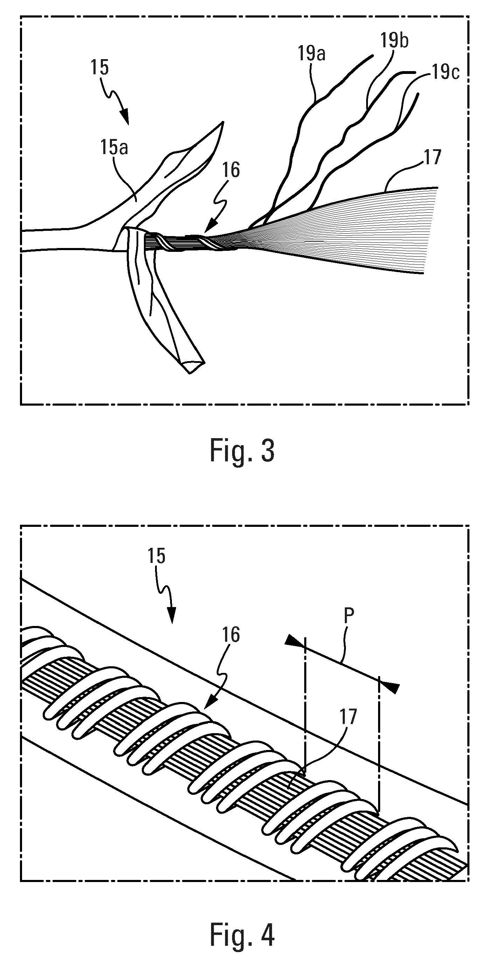

En référence aux figures 3 à 5, un fil conducteur chauffant 15 est constitué d'un brin conducteur 16 qui est enroulé en hélice autour d'une fibre centrale 17 par exemple en fibre de verre, qui assure la robustesse du fil chauffant 15. L'ensemble formé par le brin 16 et la fibre centrale 17 est entouré d'une gaine isolante 15a par exemple en Téflon. Dans cet exemple, le brin conducteur chauffant 16 est constitué de trois fils métalliques 19a, 19b, 19c. Le nombre de fils métalliques et leur nature sont choisis selon les puissances linéiques chauffantes visées.

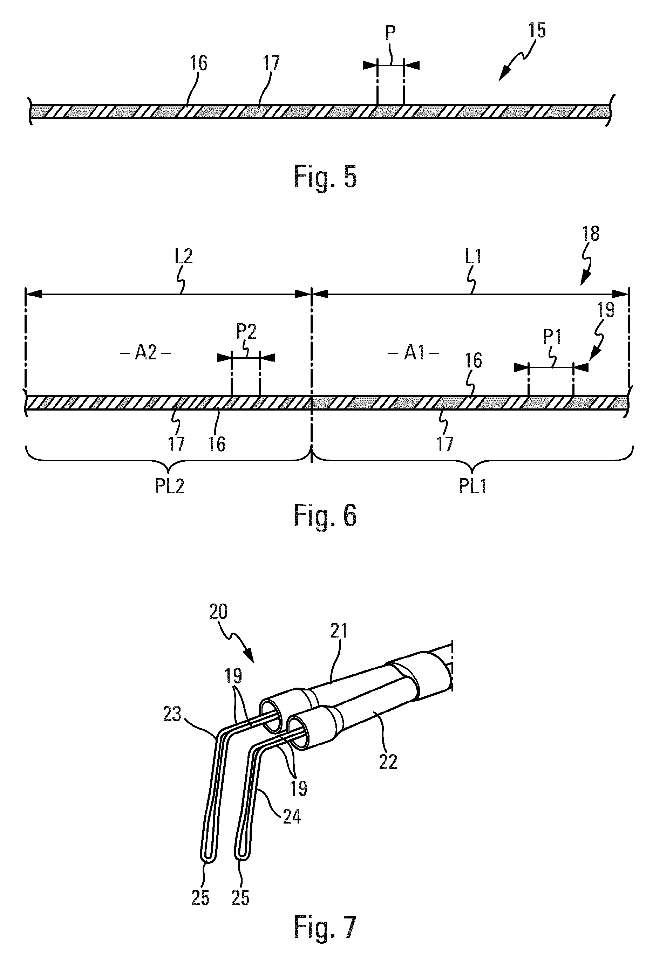

En référence aux figures 4 et 5, l'enroulage en hélice du brin 16 autour de la fibre centrale 17 est régulier et est ainsi défini par un pas P constant entre chaque brin.

Selon l'invention, on fait varier le pas P entre chaque brin 16 pour moduler la puissance linéique de chauffage sur le fil conducteur chauffant résultant. Dans la zone A1 (figure 1) où la conduite de chauffage et de transport du liquide lave glace se trouve sous le capot proche du moteur du véhicule, le pas entre les brins est plus espacé que dans la zone A2 où la conduite est soumise au vent froid.

Pour ce faire et en référence à la figure 6 qui illustre une première variante de réalisation, on utilise un élément filaire conducteur chauffant 18 comportant un brin en hélice 16 enroulé autour de la fibre centrale 17, l'ensemble formé par le brin en hélice 16 et la fibre centrale 17 étant entouré de la gaine isolante 15 non visible sur cette figure.

Dans la première zone A1 destinée à être situé sous le capot du véhicule, le pas entre chaque brin 16 est d'une première valeur P1 et dans la seconde zone A2 destinée à être en dehors du capot, le pas entre chaque brin est d'une seconde valeur P2 inférieure à la première valeur de pas P1. Ainsi, dans la zone A2, la puissance linéique de chauffe PL2 est supérieure à la puissance linéique de chauffe PL1 de la zone A1.

L'élément filaire conducteur chauffant 18 comporte une succession d'alternance de secteurs possédant une puissance linéique de chauffe PL1 et une puissance linéique de chauffe PL2. Les longueurs respectives L1, L2 de ces secteurs sont déterminées selon l'agencement des conduites de chauffage et de transport du liquide lave glace sur le véhicule. On définit ainsi une portion 19 de l'élément filaire 18 qui est constituée d'un secteur possédant une puissance linéique de chauffe PL1 et d'un secteur possédant une puissance linéique de chauffe PL2 adjacents.

L'élément filaire conducteur chauffant 18 est fabriqué selon des méthodes connues de fabrication de fil conducteur chauffant en hélice.

En référence à la figure 7 et selon une première configuration, une conduite de chauffage et de transport d'un liquide lave-glace pour balai d'essuie-glace 20 comporte deux canaux de circulation du liquide lave-glace 21,22 qui alimentent les deux rampes d'arrosage d'un balai d'essuie-glace non représenté.

Un fil conducteur chauffant 23,24 est disposé dans chaque canal de circulation 21, 22. Chaque fil conducteur chauffant 23,24 est obtenu par découpe de deux portions 19 de l'élément filaire 18 de la figure 6. Les extrémités 25 des deux portions 19 sont connectées ensemble et les extrémités opposées non visibles sont reliées à une alimentation pour former une boucle de courant.

Il peut également être envisagé un fil conducteur chauffant 23, 24 obtenu à l'aide d'un seul fil comportant deux portions 19 de l'élément filaire 18 de la figure 6. Ce fil possède successivement un premier secteur possédant une puissance linéique de chauffe PL1, un second secteur possédant une puissance linéique de chauffe PL2, un troisième secteur possédant une puissance linéique de chauffe PL2 et un quatrième secteur possédant une puissance linéique de chauffe PL1. Un pliage est réalisé entre les deux secteurs possédant une puissance linéique de chauffe PL2. Ainsi, lors de son installation dans le canal de circulation 21, 22 les secteurs de même puissance linéique se trouvent superposés.

On obtient ainsi une conduite de chauffage 20 apte à délivrer une première puissance linéique de chauffe PL1 pour une zone A1 située sous le capot du véhicule et une seconde puissance linéique de chauffe PL2 supérieure à la première puissance linéique PL1 pour une zone A2 située en dehors du capot.

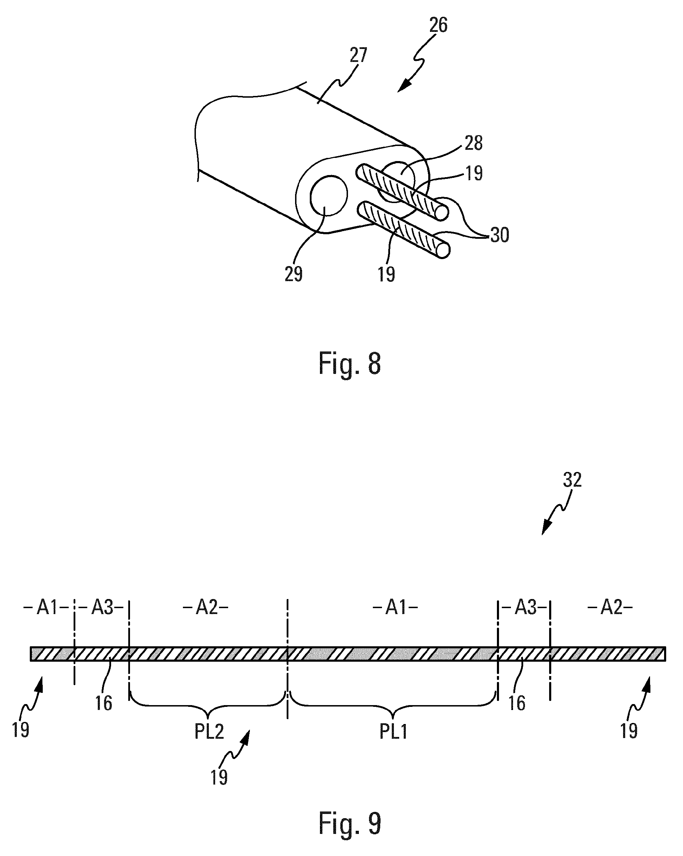

En référence à la figure 8 et selon une seconde configuration, la conduite de chauffage et de transport du liquide lave glace 26 comporte un manchon 27 extrudé de deux canaux de circulation du liquide lave glace 28,29 assurant le transport du liquide lave-glace jusqu'à deux rampes d'arrosage ménagées sur chacun des balais d'essuyage.

Un fil conducteur chauffant 30 est noyé dans la masse par coextrusion à proximité des canaux de circulation 28,29. Comme pour la première configuration de la figure 7, le fil conducteur chauffant 30 est obtenu par découpe de deux portions 19 de l'élément filaire conducteur chauffant 18 de la figure 6, ces deux portions 19 étant destinée à être connectées entre elles au niveau de leurs premières extrémités et reliées à une alimentation au niveau de leur extrémités opposées pour former une boucle de courant.

Dans cette seconde configuration, il peut y avoir une difficulté quant à la précision de découpe de la portion 19.

En effet, la conduite de chauffage et de transport du liquide lave glace 26 est réalisée par découpe d'un manchon de grande longueur dans lequel est noyé l'élément filaire conducteur chauffant 18 de la figure 6. Lors de la découpe du manchon pour la réalisation de la conduite 26, l'élément filaire 18 n'est pas visible de sorte qu'il peut être difficile de connaître avec précision la position de la jonction entre les zones A1 et A2 de l'élément filaire pour découper la portion 19 de l'élément filaire 18 et former ainsi le fil conducteur 30.

En référence à la figure 9 et pour pallier l'inconvénient précité, l'élément filaire conducteur 32 selon une seconde variante, comporte une alternance de secteurs possédant une puissance linéique de chauffe PL1 et une puissance linéique de chauffe PL2 identiques à celles de l'élément filaire 18 de la figure 6, mais comporte en outre des secteurs A3 disposés entre chaque portion 19 faite de deux secteurs possédant une puissance linéique de chauffe PL1 et une puissance linéique de chauffe PL2.

Dans la zone A3, le bobinage en hélice du brin conducteur 16 est jointif, ce qui va permettre de détecter cette zone A3 pour assurer la découpe du manchon 27 pour que le fil conducteur 30 comporte bien une zone A1 et une zone A2 de longueurs adaptées.

Cette détection peut s'opérer de deux façons.

En premier lieu, lors de l'opération d'extrusion, un marquage est réalisé sur le manchon au niveau de la troisième zone A3 qui est visualisée par un opérateur ou par un procédé automatique de détection visuelle. Le manchon 27 est ensuite découpé selon ce marquage.

En second lieu, aucun marquage n'est réalisé lors de l'opération d'extrusion et la troisième zone A3 de l'élément filaire 32 qui est noyé dans le manchon 27 est détectée grâce à un moyen de détection adapté permettant de repérer le bobinage jointif de cette zone A3, par exemple par magnétisme. Le manchon 27 est ainsi découpé selon la détection de la zone A3.

Dans les éléments filaires 18, 32 des première et seconde variante de réalisation, le rapport entre la première valeur P1 de pas de la zone A1 destinée à être située sous le capot du véhicule, et la seconde valeur P2 de pas de la zone A2 destinée à être située hors du capot du véhicule est d'environ 2, avec une première valeur de pas P1 comprise entre 1 et 5 millimètres. Bien évidemment, ce rapport sera adapté selon le type de véhicule en prenant notamment en compte la configuration des éléments situés sous le capot et susceptibles d'amener de la chaleur à la conduite

Par ailleurs, si les conduites de chauffage et de transport de liquide lave glace des première et seconde configurations des figures 7 et 8 comportent deux canaux de circulation, l'invention s'applique également à des conduites ne comportant qu'un canal de circulation du liquide lave glace pour l'alimentation d'une rampe d'arrosage unique sur chaque balai d'essuie-glace.

Enfin, l'invention porte également sur un dispositif d'essuyage pour surface vitré de véhicule automobile comportant au moins une conduite de chauffage et de transport d'un liquide lave glace 20,26 décrites et dont le canal de circulation du liquide lave-glace 21,22 ;28,29 est relié d'une part à la rampe d'arrosage qu'il alimente et d'autre part est destiné à être relié à une pompe.

Dans le cas de deux rampes d'arrosage par balai, le dispositif d'essuyage de l'invention comporte au moins une conduite de chauffage et de transport d'un dont le premier canal de circulation du liquide lave-glace 21 ; 28 est relié d'une part à la première rampe d'arrosage qu'il alimente et d'autre part est destiné à être relié à une pompe, et le second canal de circulation du liquide lave-glace 22 ; 29 est relié d'une part à la seconde rampe d'arrosage qu'il alimente et d'autre part est destiné à être relié à une pompe.

## Revendications

1. Conduite de chauffage et de transport d'un liquide lave glace pour balai d'essuie-glace, comportant au moins un canal de circulation du liquide lave glace (21, 22; 28, 29) qui s'étend depuis un réservoir de liquide lave glace situé sous le capot du véhicule jusqu'au balai d'essuie-glace et qui est agencé à proximité d'au moins un fil conducteur chauffant (23, 24 ; 30) réalisé à partir d'un élément filaire conducteur chauffant, **caractérisée en ce que** l'élément filaire conducteur chauffant comporte un brin conducteur chauffant (16) disposé en hélice autour d'une fibre centrale (17), dont le pas entre chaque brin (16) dans au moins un premier secteur du dit élément filaire (18,32) est d'une première valeur (P1) pour la production d'une première puissance linéique de chauffage (PL1), et dont le pas entre chaque brin (16) dans au moins un second secteur du dit élément filaire (18,32) est d'une seconde valeur (P2) inférieure à la première valeur (P1) pour la production d'une seconde puissance linéique de chauffage (PL2) supérieure à la première puissance linéique de chauffage (PL1)., le premier et le second secteur permettant d' assurer le chauffage du liquide lave glace circulant dans le canal de circulation (21, 22 ; 28, 29) respectivement selon la première puissance linéique (PL1) pour la zone (A1) de la conduite (20,26) située sous le capot du véhicule, et selon la seconde puissance linéique (PL2) pour la zone (A2) de la conduite (20,26) située hors du capot du véhicule.

2. Conduite selon la revendication 1, l'élément filaire conducteur chauffant, comportant une alternance de premier et de second secteurs.

3. Conduite selon la revendication 2, l'élément filaire conducteur chauffant, comportant deux troisièmes secteurs disposés sur le dit élément filaire (32) de sorte qu'entre deux troisièmes secteurs adjacents (A3) s'étendent un premier et un second secteur qui sont jointifs.

4. Conduite selon selon l'une quelconque des revendications 1 à 3 **caractérisée en ce que** le fil conducteur chauffant (23, 24 ; 30) est doublé en étant fait de deux portions (19) de l'élément filaire (18,32) qui sont parallèles et qui comprennent chacune un premier et un second (A2) secteurs adjacents, les deux portions (19) de l'élément filaire (18,32) étant connectées ensemble et reliés à une alimentation pour former une boucle de courant.

5. Conduite selon l'une quelconque des revendications 1 à 4, **caractérisée en ce que** le rapport entre la première valeur (P1) de pas entre chaque brin (16) du fil conducteur chauffant (23, 24 ; 30) pour la zone (A1) de la conduite (20,26) située sous le capot du véhicule, et la seconde valeur (P2) de pas entre chaque brin (16) du fil conducteur chauffant (23, 24 ; 30) pour la zone (A2) de la conduite (20,26) située hors du capot du véhicule est approximativement de l'ordre 2.

6. Conduite selon la revendication 5, **caractérisée en ce que** la première valeur (P1) de pas entre chaque brin (16) du fil conducteur chauffant (23, 24 ; 30) pour la zone (A1) de la conduite (20,26) située sous le capot du véhicule est comprise entre 1 et 5 millimètres.

7. Conduite selon l'une quelconque des revendications 1 à 6, **caractérisée en ce que** qu'une gaine isolante (15a) recouvre l'ensemble formé par le brin conducteur chauffant en hélice (16) et la fibre centrale (17) du fil conducteur chauffant (23, 24 ; 30).

8. Conduite selon l'une quelconque des revendications 1 à 7, **caractérisée en ce que** le fil conducteur chauffant (23,24) est disposé dans le canal de circulation du liquide lave glace (21,22).

9. Conduite selon la revendication8, **caractérisée en ce qu'**il comprend deux canaux de circulation du liquide lave glace (21,22 ; 28,29) pour l'alimentation d'un balai d'essuie-glace à deux rampes d'arrosage, et **en ce que** qu'un fil conducteur chauffant (23, 24 ; 30) est disposé dans chaque canal de circulation (21, 22 ; 28, 29).

10. Conduite selon l'une quelconque des revendications 1 à 8, **caractérisée en ce que** le canal de circulation (28,29) est agencé dans un manchon (27) extrudé, et **en ce que** le fil conducteur chauffant (30) est noyé dans la masse du manchon (27).

11. Conduite selon la revendication 10, **caractérisée en ce que** deux canaux de circulation (28,29) sont agencés dans le manchon (27) pour l'alimentation d'un balai d'essuie-glace à deux rampes d'arrosage.

12. Dispositif d'essuyage pour surface vitré de véhicule automobile comportant au moins un balai d'essuie-glace muni d'au moins une première rampe d'arrosage, **caractérisé en ce qu'**il comporte une conduite de chauffage et de transport d'un liquide lave glace selon l'une quelconque des revendications 1 à 11 dont le canal de circulation du liquide lave-glace (21, 22; 28, 29) est relié d'une part à la rampe d'arrosage qu'il alimente et d'autre part est destiné à être relié à une pompe.

13. Dispositif d'essuyage selon la revendication 12 pour surface vitrée de véhicule automobile comportant au moins un balai d'essuie-glace muni d'une première et d'une seconde rampe d'arrosage, **caractérisé en ce qu'**il comporte une conduite de chauffage et de transport d'un liquide lave glace selon l'une quelconque des revendications 9 ou 11 dont le premier canal de circulation du liquide lave-glace (21,22) est relié d'une part à la première rampe d'arrosage qu'il alimente et d'autre part est destiné à être relié à une pompe, et **en ce que** le second canal de circulation du liquide lave-glace (28,29) est relié d'une part à la seconde rampe d'arrosage qu'il alimente et d'autre part est destiné à être relié à une pompe.

14. Procédé de fabrication de la conduite selon l'une quelconque des revendications 10 et 11 prise en combinaison avec la revendication 3, **caractérisé en ce que** l'élément filaire conducteur chauffant (32) est coextrudé dans le manchon comportant le canal de circulation du liquide lave glace, puis **en ce qu'**on détecte le troisième secteur (A3) de l'élément filaire conducteur chauffant (32) et **en ce que** l'on coupe le manchon (27) au niveau de ce troisième secteur (A3) détecté.

15. Procédé selon la revendication 14, **caractérisé en ce que** le troisième secteur (A3) de l'élément filaire conducteur chauffant (32) est détectée par magnétisme après l'opération d'extrusion.

16. Procédé selon la revendication 14, **caractérisé en ce que** lors de l'opération d'extrusion, un marquage est réalisé sur le manchon (27) au niveau du troisième secteur (A3) de l'élément filaire conducteur chauffant (32), et **en ce que** la détection dudit troisième secteur (A3) est réalisée par repérage du dit marquage.

## Patentansprüche

1. Leitung zum Aufheizen und Transportieren einer Scheibenwaschflüssigkeit für Scheibenwischer, welche mindestens einen Kanal zur Zirkulation der Scheibenwaschflüssigkeit (21, 22; 28, 29) aufweist, welcher sich von einem, unter der Motorhaube des Fahrzeugs angeordneten Tank für Scheibenwaschflüssigkeit bis zum Scheibenwischer erstreckt, und welcher in der Nähe von mindestens einem leitfähigen Heizdraht (23, 24; 30) eingerichtet ist, welcher ausgehend von einem leitfähigen, drahtförmigen Heizelement ausgeführt ist,
**dadurch gekennzeichnet, dass** das leitfähige, drahtförmige Heizelement eine leitfähige Heizader (16) aufweist, welche spiralförmig um eine zentrale Faser (17) herum angeordnet ist, deren Steigung zwischen jeder Ader (16) in mindestens einem ersten Abschnitt des drahtförmigen Elements (18, 32) einen ersten Wert (P1) für die Erzeugung einer ersten, linearen Heizleistung (PL1) beträgt und deren Steigung zwischen jeder Ader (16) in mindestens einem zweiten Abschnitt des drahtförmigen Elements (18, 32) einen zweiten Wert (P2) besitzt, der kleiner als der erste Wert (P1) ist, für die Erzeugung einer zweiten, linearen Heizleistung (PL2), die größer als die erste, lineare Heizleistung (PL1) ist, wobei der erste und zweite Abschnitt es ermöglichen, das Aufheizen der im Zirkulationskanal (21, 22; 28, 29) zirkulierenden Scheibenwaschflüssigkeit jeweils entsprechend der ersten, linearen Heizleistung (PL1) für die unter der Motorhaube des Fahrzeugs angeordnete Zone (A1) der Leitung (20, 26) und entsprechend der zweiten, linearen Leistung (PL2) für die außerhalb der Motorhaube des Fahrzeugs angeordnete Zone (A2) der Leitung (20, 26) zu gewährleisten.

2. Leitung nach Anspruch 1, wobei das leitfähige, drahtförmige Heizelement eine Abwechslung von erstem und zweitem Abschnitt aufweist.

3. Leitung nach Anspruch 2, wobei das leitfähige, drahtförmige Heizelement zwei dritte Abschnitte aufweist, welche derartig auf dem drahtförmigen Element (32) angeordnet ist, dass sich zwischen zwei dritten, benachbarten Abschnitten (A3) ein erster und ein zweiter Abschnitt erstrecken, welche aneinander stoßen.

4. Leitung nach einem der Ansprüche 1 bis 3, **dadurch gekennzeichnet, dass** der leitfähige Heizdraht (23, 24; 30) dubliert wird, indem er aus zwei Teilen (19) des drahtförmigen Elements (18, 32) gemacht wird, welche parallel verlaufen und welche jeweils einen ersten und einen zweiten (A2) benachbarten Abschnitt aufweisen, wobei die beiden Teile (19) des drahtförmigen Elements (18, 32) miteinander verbunden und an einer Stromversorgung angeschlossen sind, um eine Stromschleife zu bilden.

5. Leitung nach einem der Ansprüche 1 bis 4, **dadurch gekennzeichnet, dass** das Verhältnis zwischen dem ersten Wert (P1) der Steigung zwischen jeder Ader (16) des leitfähigen Heizdrahtes (23, 24; 30) für die unter der Motorhaube des Fahrzeugs angeordnete Zone (A1) der Leitung (20, 26) und dem zweiten Wert (P2) der Steigung zwischen jeder Ader (16) des leitfähigen Heizdrahtes (23, 24; 30) für die außerhalb der Motorhaube des Fahrzeugs angeordnete Zone (A2) der Leitung (20, 26) ungefähr in der Größenordnung 2 ist.

6. Leitung nach Anspruch 5, **dadurch gekennzeichnet, dass** der erste Wert (P1) der Steigung zwischen jeder Ader (16) des leitfähigen Heizdrahtes (23, 24; 30) für die unter der Motorhaube des Fahrzeugs angeordnete Zone (A1) der Leitung (20, 26) zwischen 1 und 5 Millimeter liegt.

7. Leitung nach einem der Ansprüche 1 bis 6, **dadurch gekennzeichnet, dass** ein Isoliermantel (15a) die Baugruppe, welche aus der spiralförmigen, leitfähigen Heizader (16) und der zentralen Faser (17) des leitfähigen Heizdrahtes (23, 24; 30) gebildet wird, umhüllt.

8. Leitung nach einem der Ansprüche 1 bis 7, **dadurch gekennzeichnet, dass** der leitfähige Heizdraht (23, 24; 30) im Zirkulationskanal der Scheibenwaschflüssigkeit (21, 22) angeordnet ist.

9. Leitung nach Anspruch 8, **dadurch gekennzeichnet, dass** sie zwei Kanäle zur Zirkulation der Scheibenwaschflüssigkeit (21, 22; 28, 29) für die Versorgung eines Scheibenwischers mit zwei Wassersprühleisten aufweist, und dass ein leitfähiger Heizdraht (23, 24; 30) in jedem Zirkulationskanal (21, 22; 28, 29) angeordnet ist.

10. Leitung nach einem der Ansprüche 1 bis 8, **dadurch gekennzeichnet, dass** der Zirkulationskanal (28, 29) in einer extrudierten Muffe (27) eingerichtet ist, und dass der leitfähige Heizdraht (30) in der Masse der Muffe (27) eingebettet ist.

11. Leitung nach Anspruch 10, **dadurch gekennzeichnet, dass** zwei Zirkulationskanäle (28, 29) in der Muffe (27) für die Versorgung eines Scheibenwischers mit zwei Wassersprühleisten eingerichtet sind.

12. Wischvorrichtung für eine Scheibenoberfläche eines Kraftfahrzeugs, welche mindestens einen mit mindestens einer Wassersprühleiste versehenen Scheibenwischer aufweist, **dadurch gekennzeichnet, dass** sie eine Leitung zum Heizen und Transportieren einer Scheibenwaschflüssigkeit nach einem der Ansprüche 1 bis 11 aufweist, deren Kanal zur Zirkulation der Waschflüssigkeit (21, 22; 28, 29) einerseits mit der Wassersprühleiste, die er versorgt, verbunden ist, und andererseits dafür vorgesehen ist, mit einer Pumpe verbunden zu werden.

13. Wischvorrichtung nach Anspruch 12 für eine Scheibenoberfläche eines Kraftfahrzeugs, welche mindestens einen mit einer ersten und einer zweiten Wassersprühleiste versehenen Scheibenwischer aufweist, **dadurch gekennzeichnet, dass** sie eine Leitung zum Aufheizen und Transportieren einer Scheibenwaschflüssigkeit nach einem der Ansprüche 9 oder 11 aufweist, deren erster Kanal zur Zirkulation des Waschflüssigkeit (21, 22) einerseits mit der ersten Wassersprühleiste, die er versorgt, verbunden ist, und andererseits dafür vorgesehen ist, mit einer Pumpe verbunden zu werden, und dass der zweite Kanal zur Zirkulation der Waschflüssigkeit (28, 29) einerseits mit der zweiten Wassersprühleiste, die er versorgt, verbunden ist, und andererseits dafür vorgesehen ist, mit einer Pumpe verbunden zu werden.

14. Verfahren zur Herstellung der Leitung nach einem der Ansprüche 10 und 11 in Verbindung mit Anspruch 3, **dadurch gekennzeichnet, dass** das leitfähige, drahtförmige Heizelement (32) in der Muffe, welche den Kanal zur Zirkulation der Scheibenwaschflüssigkeit aufweist, koextrudiert wird, dass dann der dritte Abschnitt (A3) des leitfähigen, drahtförmigen Heizelements (32) detektiert wird, und dass die Muffe (27) im Bereich dieses dritten, detektierten Abschnitts (A3) geschnitten wird.

15. Verfahren nach Anspruch 14, **dadurch gekennzeichnet, dass** der dritte Abschnitt (A3) des leitfähigen, drahtförmigen Heizelements (32) nach dem Arbeitsschritt der Extrusion durch Magnetismus detektiert wird.

16. Verfahren nach Anspruch 14, **dadurch gekennzeichnet, dass** bei dem Arbeitsschritt der Extrusion eine Markierung an der Muffe (27) auf Höhe des dritten Abschnitts (A3) des leitfähigen, drahtförmigen Heizelements (32) vorgenommen wird, und dass die Detektierung des dritten Abschnitts (A3) durch Kennzeichnung der Markierung durchgeführt wird.

## Claims

1. Pipe for heating and transporting a washer fluid for a wiper, comprising at least one washer fluid circulation duct (21, 22; 28, 29) extending from a washer fluid reservoir situated under the bonnet of the vehicle as far as the wiper and arranged near to at least one heating conducting wire (23, 24; 30) made from a heating conducting filamentary element,
**characterized in that** the heating conducting wire element comprises a heating conducting strand (16) arranged in a helix around a central fibre (17), of which the pitch between strands (16) in at least one first sector of the said filamentary element (18, 32) is of a first value (P1) for producing a first linear heating power (PL1), and of which the pitch between strands (16) in at least one second sector of the said filamentary element (18, 32) is of a second value (P2) lower than the first value (P1) so as to produce a second linear heating power (PL2) greater than the first linear heating power (PL1), the first and second sector making it possible to ensure the heating of the washer fluid circulating through the circulation duct (21, 22; 28, 29) respectively according to the first linear power (PL1) in the case of the region (A1) of the pipe (20, 26) situated under the bonnet of the vehicle and according to the second linear power (PL2) for the region (A2) of the pipe (20, 26) that is situated outside of the bonnet of the vehicle.

2. Pipe according to Claim 1, the heating conducting filamentary element comprising an alternation of first and second sectors.

3. Pipe according to Claim 2, the heating conducting filamentary element comprising two third sectors arranged on the said filamentary element (32) such that contiguous first and second sectors extend between two adjacent third sectors (A3).

4. Pipe according to any one of Claims 1 to 3, **characterized in that** the heating conducting wire (23, 24; 30) is doubled, being made of two portions (19) of the filamentary element (18, 32) which are parallel and which each comprise a first and a second (A2) adjacent sectors, the two portions (19) of the filamentary element (18, 32) being connected together and connected to a power supply to form a current loop.

5. Pipe according to any one of Claims 1 to 4, **characterized in that** the ratio between the first value (P1) for the pitch between strands (16) of the heating conducting wire (23, 24; 30) for the region (A1) of the pipe (20, 26) situated under the bonnet of the vehicle and the second value (P2) for the pitch between strands (16) of the heating conducting wire (23, 24; 30) for the region (A2) of the pipe (20, 26) situated outside of the bonnet of the vehicle is approximately of the order of 2.

6. Pipe according to Claim 5, **characterized in that** the first value (P1) for the pitch between strands (16) of the heating conducting wire (23, 24; 30) for the region (A1) of the pipe (20, 26) situated under the bonnet of the vehicle is between 1 and 5 millimetres.

7. Pipe according to any one of Claims 1 to 6, **characterized in that** an insulating sheath (15a) covers the assembly formed by the helically wound heating conducting strand (16) and the central fibre (17) of the heating conducting wire (23, 24; 30).

8. Pipe according to any one of Claims 1 to 7, **characterized in that** the heating conducting wire (23, 24) is positioned inside the washer fluid circulation duct (21, 22).

9. Pipe according to Claim 8, **characterized in that** it comprises two washer fluid circulation ducts (21, 22; 28, 29) for supplying a wiper having two spray booms, and **in that** one heating conducting wire (23, 24; 30) is positioned in each circulation duct (21, 22; 28, 29).

10. Pipe according to any one of Claims 1 to 8, **characterized in that** the circulation duct (28, 29) is arranged inside an extruded sleeve (27), and **in that** the heating conducting wire (30) is embedded within the mass of the sleeve (27).

11. Pipe according to Claim 10, **characterized in that** two circulation ducts (28, 29) are arranged in the sleeve (27) to supply a wiper having two spray booms.

12. Wiper device for a glazed surface of a motor vehicle, comprising at least one wiper equipped with at least one first spray boom, **characterized in that** it comprises a pipe for heating and transporting a washer fluid according to any one of Claims 1 to 11, the washer fluid circulation duct (21, 22; 28, 29) of which is connected on the one hand to the spray boom it supplies and on the other hand is intended to be connected to a pump.

13. Wiper device according to Claim 12 for a glazed surface of a motor vehicle, comprising at least one wiper equipped with a first and a second spray boom, **characterized in that** it comprises a pipe for heating and transporting a washer fluid according to any one of Claims 9 or 11, the first washer fluid circulation duct (21, 22) of which is connected on the one hand to the first spray boom it supplies and on the other hand is intended to be connected to a pump, and **in that** the second washer fluid circulation duct (28, 29) is connected on the one hand to the second spray boom it supplies and on the other hand is intended to be connected to a pump.

14. Method for manufacturing the pipe according to either one of Claims 10 and 11 considered in combination with Claim 3, **characterized in that** the heating conducting filamentary element (32) is coextruded in the sleeve comprising the washer fluid circulation duct then **in that** the third sector (A3) of the heating conducting filamentary element (32) is detected and the sleeve (27) is cut at this detected third sector (A3).

15. Method according to Claim 14, **characterized in that** the third sector (A3) of the heating conducting filamentary element (32) is detected by magnetism after the extrusion operation.

16. Method according to Claim 14, **characterized in that** during the extrusion operation a marking is produced on the sleeve (27) at the level of the third sector (A3) of the heating conducting filamentary element (32), and **in that** detection of the said third sector (A3) is performed by identifying the said marking.
